# EUROPEAN PATENT APPLICATION

(11) **EP 4 614 995 A1**
(43) Date of publication of application: **10.09.2025**
(21) Application number: 25158784.6
(22) Date of filing: 19.02.2025
(51) Int. Cl.: H04N 23/73, H04N 23/951, G06T 5/00

(54) **IMAGING APPARATUS, CONTROL METHOD, PROGRAM, AND STORAGE MEDIUM**

(30) Priority: 07.03.2024 JP 2024034867
(71) Applicant: CANON KABUSHIKI KAISHA, Tokyo 146-8501 (JP)
(72) Inventor: SATO, Natsuko, Tokyo, 146-8501 (JP); NISHIO, Taisuke, Tokyo, 146-8501 (JP); TSUJI, Tatsuya, Tokyo, 146-8501 (JP); YAMAMOTO, Masashi, Tokyo, 146-8501 (JP)
(74) Representative: Canon Europe Limited

(57) **Abstract**

An imaging apparatus includes acquisition means configured to acquire a fluctuation amount of an image captured by imaging means, image processing means configured to perform correction processing for reducing fluctuation of the image based on the fluctuation amount acquired by the acquisition means, and determination means configured to determine an exposure time of the imaging means, wherein the determination means is configured to determine the exposure time of the imaging means based on at least one of the fluctuation amount acquired by the acquisition means and a correction intensity of the correction processing.

## Description

### BACKGROUND OF THE DISCLOSURE

### Field of the Invention

The present invention relates to an imaging apparatus, a control method, a program, and a storage medium.

### Description of the Related Art

For example, in a case where telephotography of a vessel or an aircraft is performed in a use case of a monitoring camera such as harbor surveillance and infrastructure monitoring, it is known that fluctuation of a subject image caused by uneven change of a refractive index of atmosphere (such as heat haze) deteriorates visibility of a subject. As a method of reducing such fluctuation, a method of smoothing an image in a time direction is known. However, in a case where a moving object is included in the image, the method of smoothing the image in the time direction may generate blur of the moving object. In particular, in the use case of the monitoring camera, it is desirable to perform automatic control so as to realize correction intensity suitable for a scene in order to cope with a phenomenon deteriorating the visibility of the image, such as fluctuation. As a method of correcting fluctuation other than the method of smoothing the image in the time direction, Japanese Patent Application Laid-Open No. 2015-177477 discusses a technique for correcting fluctuation by performing imaging in an exposure time and at a frame rate not affected by change of heat haze with the lapse of time.

### SUMMARY

According to a first aspect of the present invention, there is provided an imaging apparatus as specified in claims 1 to 12. According to a second aspect of the present invention, there is provided a control method as specified in claim 13. According to a third aspect of the present invention, there is provided a program as specified in claim 14. According to a fourth aspect of the present invention, there is provided a computer readable storage medium as specified in claim 15.

Further features of the present invention will become apparent from the following description of embodiments with reference to the attached drawings.

### BRIEF DESCRIPTION OF THE DRAWINGS

Figs. 1A and 1B are diagrams respectively illustrating an apparatus configuration and a functional configuration of an imaging apparatus.
Fig. 2 is a diagram illustrating fluctuation correction by smoothing in a time direction.
Figs. 3A and 3B are diagrams illustrating comparison of temporal fluctuation at different shutter speeds.
Figs. 4A and 4B are diagrams illustrating comparison of in-plane fluctuation at different shutter speeds.
Figs. 5A, 5B, and 5C are diagrams respectively illustrating relationship between temporal fluctuation and a shutter speed, relationship between in-plane fluctuation and the shutter speed, and relationship between the shutter speed and total fluctuation based on contributions of the temporal fluctuation and the in-plane fluctuation.
Figs. 6A and 6B are diagrams respectively illustrating temporal change of fluctuation varied at a high frequency, and relationship between the fluctuation and the shutter speed.
Fig. 7 is a flowchart illustrating processing for determining execution/inexecution of the fluctuation correction.
Fig. 8 is a flowchart illustrating processing for setting a shutter speed for the fluctuation correction.
Fig. 9 is a diagram illustrating relationship between fluctuation and the shutter speed.
Fig. 10 is a flowchart illustrating processing for setting the shutter speed for the fluctuation correction.
Fig. 11 is a diagram illustrating relationship between fluctuation and the shutter speed.

### DESCRIPTION OF THE EMBODIMENTS

Some embodiments of the present disclosure will be described below with reference to accompanying drawings. The embodiments described below are examples for implementing the present disclosure, and can be appropriately corrected or changed based on a configuration of an apparatus to which the present disclosure is applied and various conditions (e.g., use condition and use environment). Further, the embodiments described below may be partially combined, as appropriate. In the following embodiments, description will be given while the same components are denoted by the same reference numerals.

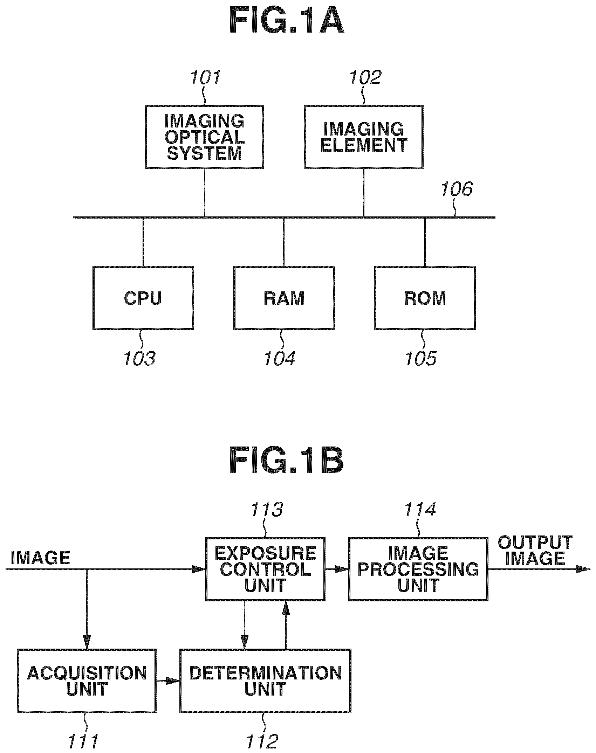

Fig. 1A is a block diagram illustrating an apparatus configuration of an imaging apparatus according to a first embodiment. Fig. 1B is a block diagram illustrating a functional configuration of the imaging apparatus according to the present embodiment.

### (Apparatus Configuration)

The imaging apparatus according to the present embodiment includes an imaging optical system 101, an imaging element 102, a central processing unit (CPU) 103, a random access memory (RAM) 104, and a read only memory (ROM) 105. The units are electrically connected via a bus 106. The imaging optical system 101 is a lens connected to the imaging apparatus. Light having entered the imaging optical system 101 forms a subject image, and the imaging element 102 captures the subject image.

The imaging optical system 101 includes one or more lenses. The lenses include a lens subjected to coating for changing transmittance of infrared components, a lens subjected to special treatment for suppressing influence of aberration, and a lens that changes optical characteristics, such as a teleconverter (extender). Alternatively, the lenses include a lens that can be designed so as to have different functions for respective wavelengths, such as a meta-lens.

The imaging element 102 is a photoelectric conversion element that captures the subject image by the imaging optical system 101 and generates image data including a plurality of pixels or an image signal. The image data or the image signal includes information on a plurality of colors. The plurality of colors includes, for example, red, green, and blue. The image data is obtained by converting light having passed through color filters corresponding to the respective colors provided in front of the imaging element, into electric signals of a red signal, a green signal, and a blue signal by the imaging element. The color filters allow not only visible light components corresponding to the colors, red, green, and blue, but also a part of infrared components included in an invisible light region to pass therethrough. As the imaging element, a complementary metal oxide semiconductor (CMOS), a charge-coupled device (CCD), a single photon avalanche diode (SPAD), or the like is used.

The CPU 103 is a central processing unit totally controlling the imaging apparatus. The RAM 104 is a nonvolatile memory, and provides a work area to be used when the CPU 103 performs processing. In addition, the RAM 104 functions as a frame memory and a buffer memory. The ROM 105 stores image data and programs for the CPU 103 to control the imaging apparatus. The ROM 105 may further store, for example, a threshold indicating intensity relating to fluctuation.

### (Functional Configuration)

The imaging apparatus according to the present embodiment includes an acquisition unit 111, a determination unit 112, an exposure control unit 113, and an image processing unit 114. The functions are executed by software, and are implemented when programs stored in the ROM (storage unit) 105 are read to the RAM 104, and the CPU 103 executes the programs.

The acquisition unit 111 acquires a fluctuation amount of an image captured by an imaging unit including the imaging optical system 101 and the imaging element 102. Alternatively, the acquisition unit 111 may acquire information about fluctuation from a fluctuation correction value of the image processing unit 114. The information about fluctuation includes, in addition to the fluctuation amount indicating a magnitude of fluctuation in the image, correction intensity during fluctuation correction.

In a case where the information about fluctuation is acquired from the acquired image, a difference of a pixel value of a pixel of interest among a plurality of consecutive images is calculated, and a magnitude of the calculated difference is acquired as the magnitude of the fluctuation. More specifically, a pixel at an edge part of a stationary subject in the image is regarded as the pixel of interest. In a case where the difference (change amount) is large in comparison of the pixel of interest among the plurality of consecutive images, the fluctuation amount is large, whereas in a case where the difference is small, the fluctuation amount is small. The acquisition unit 111 outputs the acquired fluctuation amount to the determination unit 112.

The determination unit 112 determines a shutter speed (exposure time) based on the fluctuation amount acquired by the acquisition unit 111 and information from the exposure control unit 113, thereby controlling the exposure time of the imaging element 102. The shutter speed is determined so as to reduce fluctuation occurring in the image.

The exposure control unit 113 controls exposure by performing at least one of aperture driving control, shutter speed control, and gain control based on the fluctuation amount acquired by the acquisition unit 111 and the shutter speed determined by the determination unit 112.

The image processing unit 114 performs image processing on the image data or the image signal input from the imaging element 102. The image processing includes noise reduction processing, chroma and hue correction processing, gamma correction processing, and fluctuation correction processing by temporal smoothing. The image processing unit 114 performs correction processing for reducing the fluctuation of the image based on the fluctuation amount acquired by the acquisition unit 111.

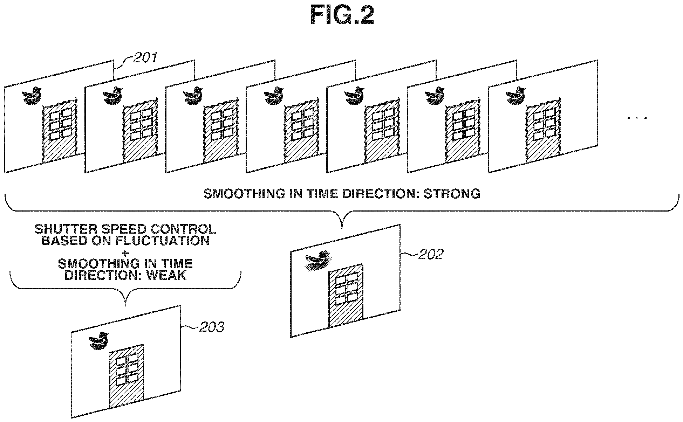

Fig. 2 is a diagram illustrating fluctuation correction by smoothing in a time direction such as simple moving average and weighted moving average. An image 201 is one frame of a moving image, and fluctuation has occurred in a building, which is a subject. An image 202 is a fluctuation-corrected image obtained by smoothing a plurality of frames. While fluctuation of the building has been reduced, blur has occurred in a bird, which is a moving object. An image 203 is a fluctuation-corrected image in a case where correction intensity of the smoothing processing in the time direction is weak compared with the image 202. A method of changing the correction intensity described here is a method of changing the number of frames to be smoothed, but a method of changing a weight of the weighted moving average and the like may be used.

In the present embodiment, as in the case where the image 203 is generated, shutter speed control based on fluctuation is performed. As a result, fluctuation originally occurring in the image at imaging is reduced, and even when the correction intensity of the smoothing processing in the time direction is weakened, an image in which fluctuation is corrected and a moving object blur is suppressed can be obtained. A method of determining the shutter speed for reducing fluctuation will be described below.

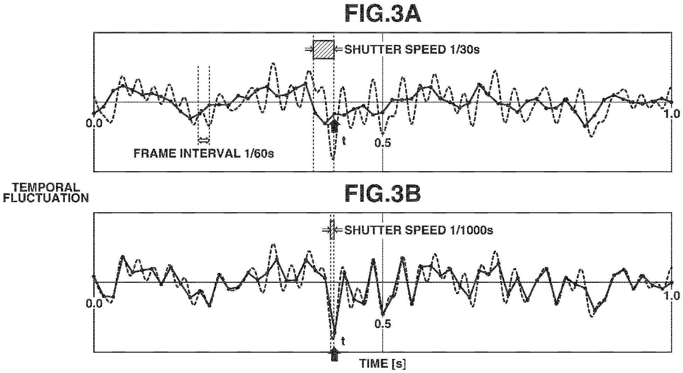

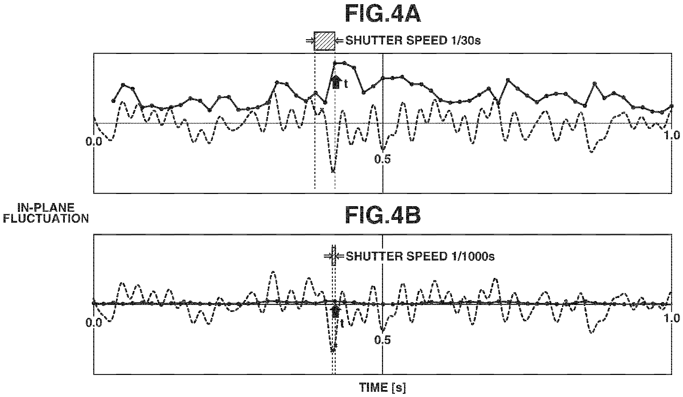

First, the relationship between fluctuation and the shutter speed will be described with reference to Figs. 3A and 3B and Figs. 4A and 4B. The fluctuation is considered in terms of change of an amplitude with the lapse of time (hereinafter, temporal fluctuation) and in terms of change in a region of interest in a subject within one frame (hereinafter, in-plane fluctuation).

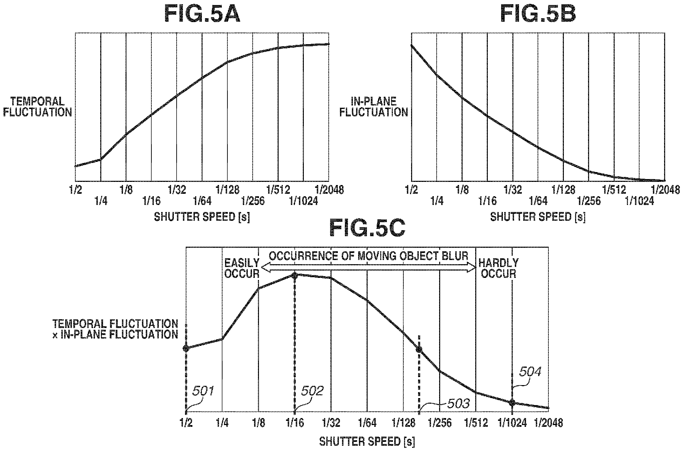

Figs. 3A and 3B illustrate comparison of the temporal fluctuation at different shutter speeds. Dashed lines indicate random waveforms simulating fluctuation and indicate temporal changes of the fluctuation in one second. Solid lines in Figs. 3A and 3B respectively indicate temporal fluctuation in a case where imaging is performed at a shutter speed of 1/30 seconds and 1/1000 seconds. Points on each of the solid lines indicate time points when one frame is generated. In this example, a frame rate is set to 60 fps. Therefore, 60 points are present in one second. The temporal fluctuation is calculated by averaging fluctuation (dotted line) by an accumulation time corresponding to the shutter speed before the time point when one frame is generated. The amplitude of the temporal fluctuation at time t in Figs. 3A and 3B is greater at the shutter speed of 1/1000 seconds than at the shutter speed of 1/30 seconds. This is because an averaging period is reduced and responsiveness to change of fluctuation becomes high as the shutter speed is higher. Fig. 5A illustrates relationship between the shutter speed and the temporal fluctuation.

The temporal fluctuation is larger as the shutter speed is higher, and the temporal fluctuation is smaller as the shutter speed is lower.

Figs. 4A and 4B illustrate comparison of the in-plane fluctuation at different shutter speeds. Dashed lines in Figs. 4A and 4B also indicate temporal changes of the fluctuation as in Figs. 3A and 3B. Solid lines in Figs. 4A and 4B respectively indicate the in-plane fluctuation in the case where imaging is performed at the shutter speed of 1/30 seconds and 1/1000 seconds. The in-plane fluctuation is calculated by calculating difference between minimum fluctuation and maximum fluctuation (dotted lines) within the accumulation time corresponding to the shutter speed before the time point when one frame is generated. Cross marks in Figs. 4A and 4B indicate minimum fluctuation and maximum fluctuation within the accumulation time at time t, and the in-plane fluctuation is smaller at the shutter speed of 1/1000 seconds than at the shutter speed of 1/30 seconds. This is because the accumulation time is reduced and the fluctuation change amount within the accumulation time is also reduced as the shutter speed is higher. Fig. 5B illustrates relationship between the shutter speed and the in-plane fluctuation. The in-plane fluctuation is smaller as the shutter speed is higher, and the in-plane fluctuation is larger as the shutter speed is lower.

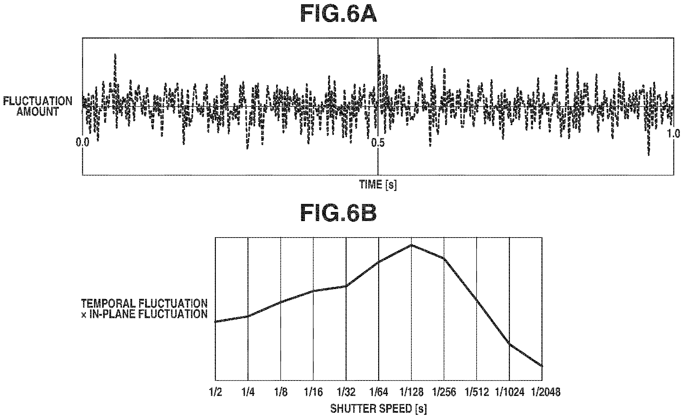

Fig. 5C illustrates relationship between the shutter speed and total fluctuation based on contributions of the temporal fluctuation and the in-plane fluctuation. In the fluctuation simulated here, maximum fluctuation appears at a shutter speed 502, and fluctuation at a shutter speed 501 lower than the shutter speed 502 and fluctuation at a shutter speed 503 higher than the shutter speed 502 are small. When influence of a moving object blur is considered, the moving object blur is likely to occur as the shutter speed becomes lower, and the moving object blur is less likely to occur as the shutter speed becomes higher. Therefore, comparing the shutter speed 501 and the shutter speed 503 at which the fluctuation is about the same, the shutter speed 503, which is faster, is superior because the moving object blur can be suppressed and the fluctuation can be reduced. Further, at a shutter speed 504, an effect of reducing the fluctuation greater than the effect at the shutter speed 503 can be achieved. However, the fluctuation is a phenomenon dependent on a temperature, a humidity, carbon dioxide concentration, and the like of atmosphere, and an amplitude and a frequency of the fluctuation depend on an environment where the fluctuation occurs. Fig. 6A illustrates a temporal change in one second, of the fluctuation that is varied at a frequency higher than a frequency of the fluctuation simulated in Figs. 3A to 5C.

Fig. 6B illustrates relationship between the shutter speed and the total fluctuation based on contributions of the temporal fluctuation and the in-plane fluctuation in the fluctuation illustrated in Fig. 6A, and. As compared with Fig. 5C, a basic shape of the graph is not changed, but the shutter speed at which the maximum fluctuation appears is shifted to a high-speed side, and an appropriate shutter speed depends on a frequency of the fluctuation. Therefore, the shutter speed for reducing the fluctuation is preferably set based on characteristics such as the amplitude and the frequency of the fluctuation.

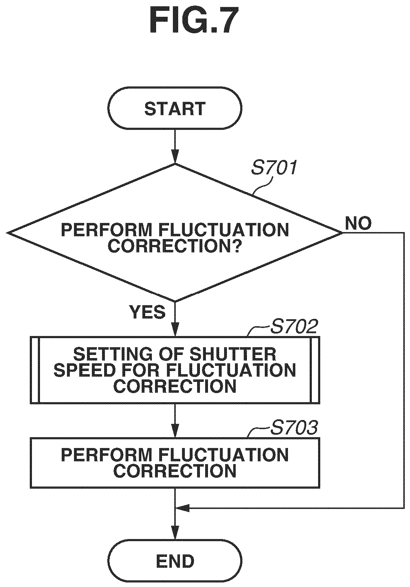

There are some methods of setting the shutter speed based on the characteristics of the fluctuation. In the present embodiment, a method of setting the shutter speed by using characteristics that the moving object blur is small and the fluctuation is also small at the high shutter speed will be described. Fig. 7 is a flowchart illustrating main processing according to the present embodiment.

In step S701, execution/inexecution of the fluctuation correction is determined. Execution/inexecution of the fluctuation correction is determined based on user setting information or the fluctuation amount acquired by the acquisition unit 111. In a case where the determination is performed based on the user setting information, setting information indicating whether to perform the fluctuation correction is stored in the RAM 104, the ROM 105, or an external storage device. Execution/inexecution of the fluctuation correction is determined based on the setting information acquired by the acquisition unit 111. In a case where the determination is performed based on the acquired fluctuation amount, it is determined that the fluctuation correction is to be performed in a case where the acquired fluctuation amount is a predetermined amount or more. The predetermined amount can be optionally set by a user or a designer, and the fluctuation amount allowable by the user or the designer may be set. In a case where it is determined that the fluctuation correction is to be performed (YES in step S701), the processing proceeds to step S702. In a case where it is determined that the fluctuation correction is not to be performed (NO in step S701), the processing ends.

In step S702, the determination unit 112 determines the shutter speed based on the fluctuation amount. A determination method is described below.

In step S703, the image processing unit 114 performs the fluctuation correction by the image processing. Correction intensity of the fluctuation correction can be determined based on the fluctuation amount of an input image. Alternatively, the correction intensity can be determined by setting by the user. The correction intensity may be determined irrespective of a determination result of execution/inexecution of the fluctuation correction. In other words, the correction intensity of the fluctuation correction can be determined in any of steps S701 to S703 (it is sufficient to calculate correction intensity before processing for fluctuation correction is started). In a case where the fluctuation remains after step S702, the fluctuation correction by the image processing is performed at intensity corresponding to the remaining fluctuation. The fluctuation correction by the image processing is, for example, processing for smoothing the image in the time direction.

The processing in steps S701 to S703 may be performed again based on change of a scene and the like. For example, the processing in steps S701 to S703 can be performed again based on a determination condition, for example, a case where a change amount of the fluctuation amount of the input image is greater than or equal to a predetermined amount, a case where a change amount of exposure of the input image is greater than or equal to a predetermined amount, or a case where a predetermined time elapses after previous execution. That is, in a case where the change amount of exposure from proper exposure is greater than or equal to the predetermined amount, the exposure time may be redetermined or the exposure may be changed by changing a parameter relating to brightness different from the exposure time. In other words, in a case where the change amount of the fluctuation amount is less than the predetermined amount, the current exposure time may be maintained.

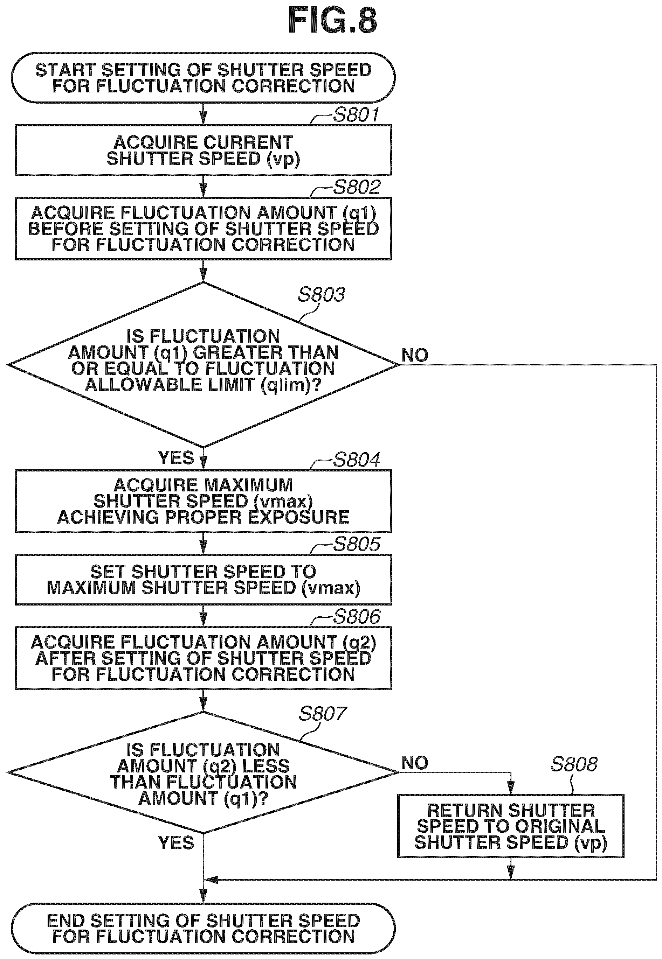

Next, processing for setting the shutter speed for the fluctuation correction (in step S702) is described with reference to a flowchart in Fig. 8.

In step S801, the determination unit 112 acquires a current shutter speed vp from the exposure control unit 113.

In step S802, the determination unit 112 acquires a fluctuation amount q1 of the input image from the acquisition unit 111.

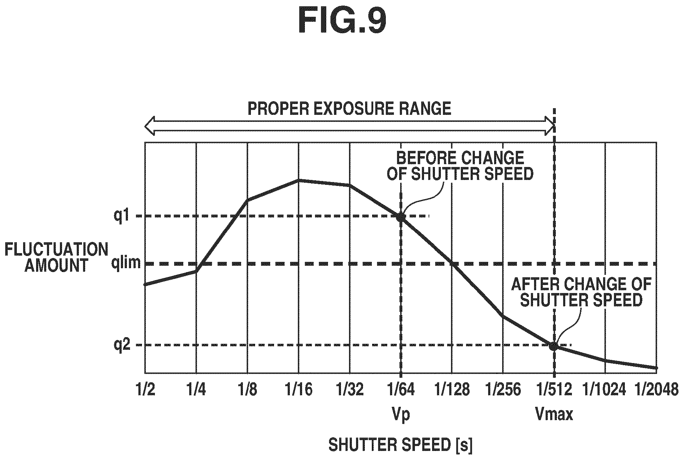

In step S803, it is determined whether the fluctuation amount q1 acquired in step S802 is greater than or equal to a preset fluctuation allowable limit qlim (predetermined amount). The fluctuation allowable limit qlim is set to a value greater than or equal to the predetermined amount used for determining execution/inexecution of the fluctuation correction in step S701. The user or the designer may set the predetermined amount used for determining execution/inexecution of the fluctuation correction and the predetermined amount used for determining whether to control the shutter speed, to different amounts. As illustrated in Fig. 9, in a case where imaging is performed at the shutter speed of about 1/64 seconds, the fluctuation amount q1 is greater than the fluctuation allowable limit qlim. In this case (YES in step S803), the processing proceeds to step S804. In a case where the fluctuation amount q1 is less than the fluctuation allowable limit qlim (NO in step S803), the processing for setting the shutter speed for the fluctuation correction ends. The determination may be performed based on the correction intensity of the fluctuation correction in place of the fluctuation amount q1. More specifically, in step S803, it may be determined whether the correction intensity of the fluctuation correction is greater than or equal to predetermined intensity. In a case where a determination result is YES, the processing may proceed to step S804. Alternatively, the determination may be performed based on a combination of the fluctuation amount and the correction intensity. For example, the fluctuation amount q1 (and correction intensity corresponding to fluctuation amount) and the correction intensity set by the user are compared, and a higher fluctuation amount or correction intensity may be used.

In step S804, the acquisition unit 111 acquires an exposure time range settable to the imaging unit, and the determination unit 112 sets, as the shutter speed for the fluctuation correction, a maximum shutter speed vmax (shortest exposure time) within the acquired exposure time range to the imaging unit. In the present embodiment, the shortest exposure time settable to the imaging unit is set, but the shutter speed is not necessarily the maximum shutter speed. It is sufficient to determine the shutter speed higher than the current shutter speed so as to reduce the fluctuation amount.

The exposure time range settable to the imaging unit indicates an exposure time range at which brightness of the image is not excessively lowered, or noise is not increased by a gain increased to maintain the brightness of the image. Therefore, the exposure time range settable to the imaging unit can be calculated by comprehensively considering parameters relating to the brightness of the image including luminance of the image, a noise amount, a shutter speed, a gain value, an aperture value, presence/absence of a neutral density (ND) filter, and the like. For example, allowable brightness or noise amount of the image is set in advance, and a shutter speed at which the brightness does not exceed the allowable brightness or the noise amount does not exceed the allowable noise amount in a case where the shutter speed is lowered is a lower limit of the settable exposure time range. As described above, it is sufficient to determine the shutter speed within a range where proper exposure is maintained.

In step S805, the exposure control unit 113 controls the shutter speed to the shutter speed vmax.

In step S806, the determination unit 112 acquires a fluctuation amount q2 at the shutter speed vmax, from the acquisition unit 111.

In step S807, the determination unit 112 compares the fluctuation amounts before and after the setting of the shutter speed for the fluctuation correction. In Fig. 9, the fluctuation amount q2 is less than the fluctuation amount q1, and the fluctuation is reduced after the setting of the shutter speed for the fluctuation amount is performed. As illustrated, in a case where the fluctuation amount after the setting of the shutter speed for the fluctuation correction is less than the fluctuation amount before the setting (YES in step S807), the processing for setting the shutter speed for the fluctuation correction ends.

In a case where the fluctuation amount is increased after the setting of the shutter speed for the fluctuation correction is performed (NO in step S807), the determination unit 112 returns the shutter speed to the original shutter speed vp in step S808. The exposure control unit 113 controls the shutter speed based on the shutter speed set by the determination unit 112.

As described above, in the present embodiment, the exposure time of the imaging unit is determined based on at least one of the fluctuation correction amount acquired by the acquisition unit 111 and the correction intensity of the fluctuation correction. More specifically, different exposure times (shutter speeds) are determined based on whether the fluctuation correction amount (or correction intensity of fluctuation correction) is greater than or equal to a reference value. As a result, the shutter speed for reducing the fluctuation can be easily set, and the fluctuation correction can be performed while suppressing the moving object blur that is an adverse effect of the fluctuation correction by the image processing.

In the present embodiment, the case where the imaging unit including the imaging optical system 101 and the imaging element 102 is integral with the image processing unit 114 (corresponding to CPU 103, RAM 104, and ROM 105) that performs the fluctuation correction is described. However, the imaging unit and the image processing unit 114 may be separated from each other. In other words, an external information processing apparatus may receive/acquire an image captured by the imaging apparatus via a network, and perform calculation of the fluctuation amount, calculation of the fluctuation correction amount, and determination of the shutter speed of the imaging apparatus based on the acquired image. In this case, the imaging apparatus can receive the determined shutter speed from the external information processing apparatus, and totally control the exposure including the gain based on the shutter speed received by the exposure control unit 113.

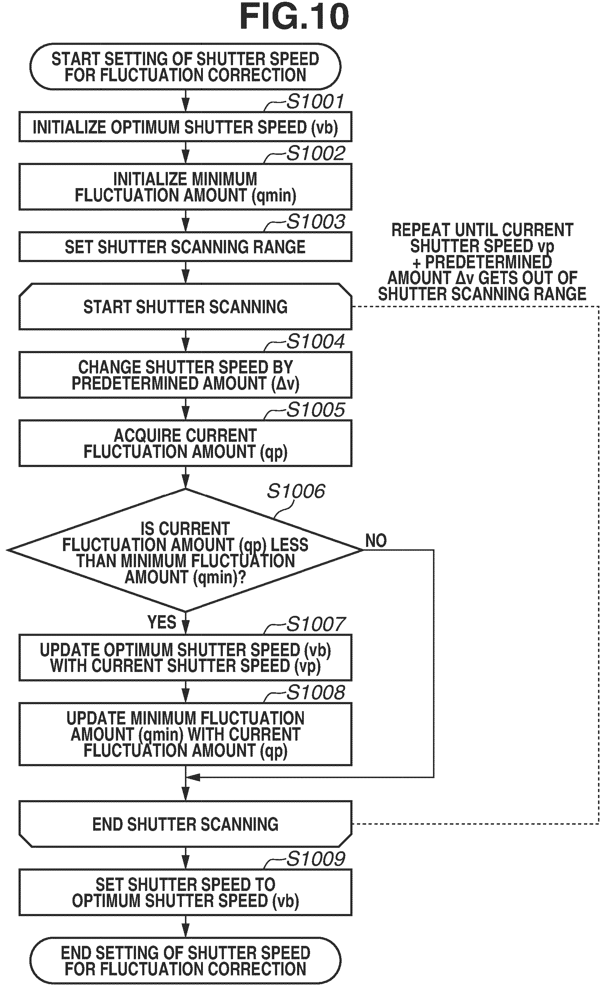

In a second embodiment, not a case where relationship between the shutter speed and the fluctuation amount has a simple shape with one peak as illustrated in the first embodiment, but a case where minimum fluctuation appears at a certain shutter speed, for example, a case where the fluctuation has periodicity is considered. In this case, the optimum shutter speed can be set by setting the shutter speed by a method described below, rather than by simply making the shutter speed high. The processing for setting the shutter speed for the fluctuation correction (in step S702) according to the present embodiment will be described with reference to a flowchart in Fig. 10. An apparatus configuration and a functional configuration of an imaging apparatus according to the present embodiment are similar to those according to the first embodiment. Therefore, description thereof will be omitted.

In step S1001, the determination unit 112 receives the current shutter speed from the exposure control unit 113, and initializes the shutter speed at which the fluctuation amount becomes minimum (hereinafter, optimum shutter speed vb) with the current shutter speed vp.

In step S1002, the determination unit 112 acquires a current fluctuation amount qp from the acquisition unit 111, and initializes the minimum value of the fluctuation amount (hereinafter, minimum fluctuation amount qmin) varied by change of the shutter speed, with the current fluctuation amount qp.

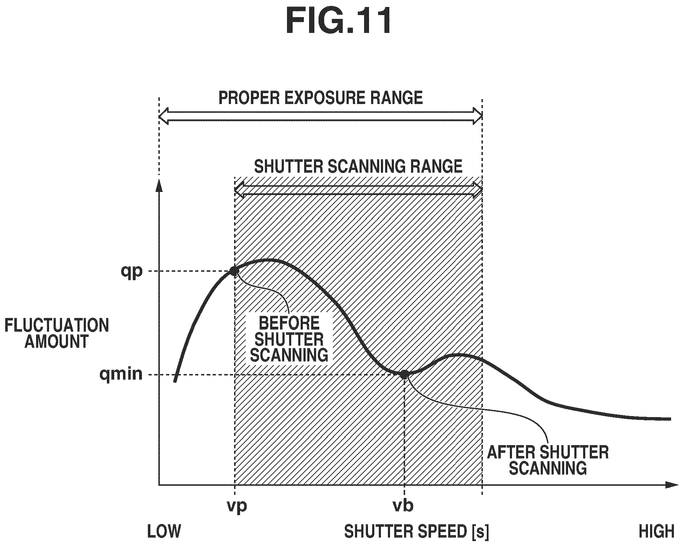

In step S1003, the determination unit 112 acquires the fluctuation amount while changing the shutter speed by a predetermined amount Δv, and determines the optimum shutter speed vb at which the fluctuation amount becomes minimum (hereinafter, shutter scanning). At this time, a changing range of the shutter speed (hereinafter, shutter scanning range) is set. The shutter scanning range is set based on the current shutter speed vp and the shutter speed range where the proper exposure calculated by the exposure control unit 113 is maintained. More specifically, a range between the shutter speed greater than or equal to the shutter speed before the shutter scanning and the shutter speed less than or equal to the maximum shutter speed within the proper exposure range is set. A shaded region illustrated in Fig. 11 is the shutter scanning range. The reason why a region on a side lower than the shutter speed before the shutter scanning is not subjected to the shutter scanning is to avoid occurrence of a moving image blur due to the shutter speed for the fluctuation correction becoming lower than the originally-set shutter speed. In addition, when the exposure is maintained by the gain control during calculation of the shutter speed range where the proper exposure is maintained, noise in the image may be increased. Therefore, to prevent the noise from increasing, the shutter speed range where the proper exposure is maintained is desirably calculated while the gain is fixed.

In step S1004, the determination unit 112 sets a value that is increased by the predetermined amount Δv from the current shutter speed vp, as a control target of the shutter speed, and outputs the set shutter speed to the exposure control unit 113. The exposure control unit 113 controls the shutter speed based on the shutter speed received from the determination unit 112.

In step S1005, the determination unit 112 acquires the current fluctuation amount qp at the shutter speed set in step S1004, from the acquisition unit 111.

In step S1006, the determination unit 112 determines whether the current fluctuation amount qp is less than the minimum fluctuation amount qmin. In a case where the current fluctuation amount qp is less than the minimum fluctuation amount qmin (YES in step S1006), the processing proceeds to step S1007. In a case where the current fluctuation amount qp is greater than or equal to the minimum fluctuation amount qmin (NO in step S1006), subsequent steps S1007 and S1008 are skipped, and the shutter scanning is continued.

In step S1007, the determination unit 112 updates the optimum shutter speed vb with the current shutter speed vp.

In step S1008, the determination unit 112 updates the minimum fluctuation amount qmin with the current fluctuation amount qp.

By repeating the processing in steps S1004 to S1008 until the current shutter speed vp + the predetermined amount Δv goes out of the shutter scanning range, the shutter speed at which the fluctuation amount becomes minimum can be determined within the shutter scanning range. In Fig. 11, the shutter speed at which the minimum fluctuation amount qmin is obtained within the shutter scanning range is the optimum shutter speed vb.

In step S1009, the determination unit 112 sets the optimum shutter speed vb as the control target of the shutter speed, and outputs the shutter speed to the exposure control unit 113. The exposure control unit 113 controls the shutter speed based on the shutter speed received from the determination unit 112. As described above, the shutter speed at which the fluctuation amount becomes minimum is determined by scanning. Thus, the shutter speed can be controlled to the shutter speed at which the fluctuation amount is reduced with high accuracy as compared with the first embodiment, and a higher fluctuation reduction effect can be achieved.

### (Modification)

As a modification of the present embodiment, it may be determined in step S1006 whether the acquired current fluctuation amount qp is less than or equal to a predetermined amount, and in a case where the acquired current fluctuation amount qp is less than or equal to the predetermined amount, the shutter scanning may be terminated. As a result, the processing in the flowchart can be terminated when the fluctuation amount becomes less than or equal to a desired fluctuation amount, without performing the shutter scanning until the fluctuation amount becomes minimum. Thus, effects superior to the effects obtained by the present embodiment in terms of a processing speed and processing efficiency can be achieved.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to embodiments, it is to be understood that the invention is not limited to the disclosed embodiments but is defined by the scope of the following claims.

## Claims

1. An imaging apparatus comprising:
acquisition means (111) configured to acquire a fluctuation amount of an image captured by imaging means (101, 102);
image processing means (114) configured to perform correction processing for reducing fluctuation of the image based on the fluctuation amount acquired by the acquisition means; and
determination means (112) configured to determine an exposure time of the imaging means,
wherein the determination means is configured to determine the exposure time of the imaging means based on at least one of the fluctuation amount acquired by the acquisition means and a correction intensity of the correction processing.

2. The imaging apparatus according to claim 1, wherein the determination means (112) is configured to determine the exposure time to reduce fluctuation occurring in the image, based on at least one of the fluctuation amount acquired by the acquisition means (111) and the correction intensity of the correction processing.

3. The imaging apparatus according to claim 1 or 2, wherein the determination means (112) is configured to, in a case where it is determined that the fluctuation amount acquired by the acquisition means (111) is greater than or equal to a predetermined amount, determine an exposure time shorter than a current exposure time of the imaging means, as the exposure time of the imaging means.

4. The imaging apparatus according to claim 3,
wherein the acquisition means (111) is configured to acquire an exposure time range settable to the imaging means, and
wherein the determination means (112) is configured to, in a case where it is determined that the fluctuation amount acquired by the acquisition means is greater than or equal to the predetermined amount, determine a shortest exposure time within the exposure time range settable to the imaging means, as the exposure time of the imaging means.

5. The imaging apparatus according to claim 1,
wherein the acquisition means (111) is configured to acquire a plurality of fluctuation amounts of a plurality of images captured by the imaging means while changing the exposure time of the imaging means by a predetermined amount, and
wherein the determination means (112) is configured to determine an exposure time at which fluctuation occurring in the images captured by the imaging means is less than a predetermined amount, as the exposure time of the imaging means, based on the plurality of fluctuation amounts acquired by the acquisition means.

6. The imaging apparatus according to any one of the preceding claims wherein the determination means (112) is configured to determine the exposure time of the imaging means within a range where proper exposure of the image captured by the imaging means is maintained.

7. The imaging apparatus according to any one of the preceding claims, wherein the determination means (112) is configured to determine the exposure time of the imaging means within a range where a gain of an imaging element included in the imaging means is maintained.

8. The imaging apparatus according to any one of the preceding claims,
wherein the acquisition means (111) is configured to acquire the fluctuation amount at a predetermined time interval,
wherein the determination means is configured to:
maintain the current exposure time, in a case where a change amount of a current fluctuation amount is less than a predetermined amount, the fluctuation amount acquired when a current exposure time is determined being a reference, and
redetermine the exposure time in a case where the change amount of the current fluctuation amount is greater than or equal to the predetermined amount.

9. The imaging apparatus according to any one of the preceding claims, wherein the determination means is configured to, in a case where a change amount of exposure from proper exposure is greater than or equal to a predetermined amount, redetermine the exposure time or change exposure by changing a parameter relating to brightness different from the exposure time.

10. The imaging apparatus according to any one of the preceding claims, wherein the determination means is configured to redetermine the exposure time in a case where a predetermined time elapses.

11. The imaging apparatus according to any one of the preceding claims, wherein the fluctuation amount is calculated based on a difference of a pixel value among a plurality of images which are frames of a moving image captured by the imaging means.

12. The imaging apparatus according to claim 11, wherein the correction processing is temporal smoothing of the images.

13. A control method comprising:
acquiring a fluctuation amount of an image captured by imaging means;
performing correction processing for reducing fluctuation of the image based on the acquired fluctuation amount; and
determining an exposure time of the imaging means,
wherein the exposure time of the imaging means is determined based on the acquired fluctuation amount or a correction intensity of the correction processing.

14. A program for causing a computer to execute the control method according to claim 13.

15. A computer-readable storage medium storing the program according to claim 14.
